# EUROPEAN PATENT APPLICATION

(11) **EP 3 588 819 A1**
(43) Date of publication of application: **01.01.2020**
(21) Application number: 18179720.0
(22) Date of filing: 26.06.2018
(51) Int. Cl.: H04J 14/02

(54) **MULTI-DEGREE COLORLESS DIRECTIONLESS ROADM SYSTEM**

(71) Applicant: Koninklijke KPN N.V., 3072 AP Rotterdam (NL)
(72) Inventor: Mefleh, Ali, 1058 VV Amsterdam (NL)
(74) Representative: Wuyts, Koenraad Maria

(57) **Abstract**

A Colorless Directionless (CD) Reconfigurable Optical Add Drop Multiplexer (ROADM) system is described. Compared to known CD-ROADM architectures, the described system is directionless while using fewer interconnections between the degrees (D1-D3) and the add-drop modules (AD1-AD3). Additionally, a method of establishing such a CD ROADM system is described, and a method of re-configuring such a CD ROADM to re-route network traffic.

## Description

### FIELD OF THE INVENTION

The invention relates to a Reconfigurable Optical Add Drop Multiplexer (ROADM) system, and specifically to a Colorless Directionless (CD) ROADM system.

The invention further relates to a transport network comprising the CD ROADM system, to a method of reconfiguring the CD ROADM system, to a computer program comprising instructions to perform the method of reconfiguring the CD ROADM system, and to a method of establishing the CD ROADM system.

### BACKGROUND ART

In Wavelength Division Multiplexing (WDM) networks, it is desirable to be able to switch traffic at the wavelength layer. For that purpose, Reconfigurable Optical Add Drop Multiplexer (ROADM) systems have been developed which allow for adding, dropping and express-routing traffic through network nodes. The publication *"*Comparison of CD(C) ROADM Architectures for Space Division Multiplexed Networks" by Rivas-Moscoso et al., OFC, January 2017, describes a typical ROADM architecture, which comprises a number of degrees and a corresponding number of add-drop modules. The degrees may be interconnected, for example, by a full-mesh set of interconnections, so as to allow traffic to be routed between the degrees. Such interconnections are typically fiber-optic interconnections. Each add-drop module may provide a plurality of add-ports and a plurality of drop-ports for the respective degree. Such add-ports and drop-ports may also be commonly referred to as add-drop ports'.

Colorless and Directionless (CD) ROADM systems have been developed to provide architectural flexibility and operational efficiency. CD ROADM systems are typically based on Wavelength Selective Switches (WSSs), which in particular may be used as (de)multiplexers of the degrees and/or of the add-drop modules. Here, 'colorless' may refer to a ROADM architecture in which any add-drop port (or at least a sizeable subset of all add-drop ports) accepts any wavelength. Moreover, 'directionless' may refer to a ROADM architecture in which traffic from any degree is switchable to any of the add-drop ports of any other degree, and vice versa (or at least switchable to/from a sizeable subset of degrees and/or add-drop ports).

In prior art CD ROADM architectures, 'directionless' is established by each degree being directly connected to each of the add-drop modules. Such a configuration of interconnections is also known as a 'full-mesh' configuration.

Consider for example a CD ROADM architecture in which each degree comprises a i) demultiplexer having an input port for a wavelength multiplexed input signal and a plurality of output ports for demultiplexing the wavelength multiplexed input signal into a plurality of demultiplexed output signals, and ii) a multiplexer having an output port for a wavelength multiplexed output signal and a plurality of input ports for multiplexing a plurality of input signals into the wavelength multiplexed output signal. In such a CD ROADM architecture, each degree may be connected to each of the add-drop modules to establish the aforementioned full-mesh configuration of interconnections. Accordingly, for an N-degree CD ROADM architecture, N ports of each degree's demultiplexer and N ports of each degree's multiplexer have to be allocated for interconnections with the add-drop modules so as to establish the full-mesh interconnections with the add-drop modules. When also considering that in an N-degree CD ROADM architecture, N-1 ports may be needed to interconnect the degrees themselves to establish a full-mesh configuration, this means that each degree needs to be provided with a multiplexer and a demultiplexer each having at least 2N-1 ports.

As such, when using for example WSSs with 20 ports for each of the degree's demultiplexer and multiplexer, only a 10-degree ROADM can be made. Similarly, a WSS with 32 ports only allows a 16-degree ROADM to be made.

Disadvantageously, such a known CD ROADM architecture only allows a N/2 degree ROADM to be made when using an N-port WSS.

### SUMMARY OF THE INVENTION

It would be desirable to obtain a CD ROADM system in which directionless is established in a manner using fewer ports of a respective degree.

In accordance with a first aspect of the invention, a multi-degree colorless directionless reconfigurable optical add drop multiplexer system is provided.

The system may comprise:
- a plurality of degrees, each of the degrees having:
   a demultiplexer having an input port for a wavelength multiplexed input signal and a plurality of output ports for demultiplexing the wavelength multiplexed input signal into a plurality of demultiplexed output signals, and
   a multiplexer having an output port for a wavelength multiplexed output signal and a plurality of input ports for multiplexing a plurality of input signals into the wavelength multiplexed output signal;
- a plurality of add-drop modules each comprising an add sub-module and a drop sub-module,
wherein each drop sub-module comprises a drop demultiplexer having a plurality of drop ports and a drop multiplexer having a plurality of input ports for multiplexing a plurality of input signals into an output signal provided to the drop demultiplexer,
wherein each add sub-module comprises an add multiplexer having a plurality of add ports and an add demultiplexer having a plurality of output ports for demultiplexing an output signal of the add multiplexer to the plurality of output ports;
characterized in that:
- each of the degrees is selectively connected to a respective one of the add-drop modules;
- each drop sub-module further comprises a further drop demultiplexer having a plurality of output ports for demultiplexing an input signal from a respective connected degree into a plurality of output signals, wherein one of the output ports of the further drop demultiplexer is connected to one of the input ports of the drop multiplexer;
- each add sub-module further comprises a further add multiplexer having a plurality of input ports for multiplexing a plurality of input signals into an output signal to a respective connected degree, wherein one of the input ports of the further add multiplexer is connected to one of the output ports of the add demultiplexer; and
- each of the add-drop modules is interconnected to each of the other add-drop modules by:
   one of the output ports of the further drop demultiplexer of a respective add-drop module being connected to one of the input ports of the drop multiplexer of the other add-drop module, and
   one of the output ports of the add demultiplexer of the respective add-drop module being connected to one of the input ports of the further add multiplexer of the other add-drop module.

In a further aspect of the invention, a transport network is provided comprising the CD ROADM system as described above, which thus comprises:
- a plurality of degrees, each of the degrees having:
   a demultiplexer having an input port for a wavelength multiplexed input signal and a plurality of output ports for demultiplexing the wavelength multiplexed input signal into a plurality of demultiplexed output signals, and
   a multiplexer having an output port for a wavelength multiplexed output signal and a plurality of input ports for multiplexing a plurality of input signals into the wavelength multiplexed output signal;
- a plurality of add-drop modules each comprising an add sub-module and a drop sub-module,
wherein each drop sub-module comprises a drop demultiplexer having a plurality of drop ports and a drop multiplexer having a plurality of input ports for multiplexing a plurality of input signals into an output signal provided to the drop demultiplexer,
wherein each add sub-module comprises an add multiplexer having a plurality of add ports and an add demultiplexer having a plurality of output ports for demultiplexing an output signal of the add multiplexer to the plurality of output ports;
characterized in that:
- each of the degrees is selectively connected to a respective one of the add-drop modules;
- each drop sub-module further comprises a further drop demultiplexer having a plurality of output ports for demultiplexing an input signal from a respective connected degree into a plurality of output signals, wherein one of the output ports of the further drop demultiplexer is connected to one of the input ports of the drop multiplexer;
- each add sub-module further comprises a further add multiplexer having a plurality of input ports for multiplexing a plurality of input signals into an output signal to a respective connected degree, wherein one of the input ports of the further add multiplexer is connected to one of the output ports of the add demultiplexer; and
- each of the add-drop modules is interconnected to each of the other add-drop modules by:
   one of the output ports of the further drop demultiplexer of a respective add-drop module being connected to one of the input ports of the drop multiplexer of the other add-drop module, and
   one of the output ports of the add demultiplexer of the respective add-drop module being connected to one of the input ports of the further add multiplexer of the other add-drop module.

In a further aspect, an add-drop module for a multi-degree colorless directionless reconfigurable optical add drop multiplexer system is provided.

The add-drop module may comprise:
- a drop sub-module comprising a drop demultiplexer having a plurality of drop ports and a drop multiplexer having a plurality of input ports for multiplexing a plurality of input signals into an output signal provided to the drop demultiplexer; and
- an add sub-module comprising an add multiplexer having a plurality of add ports and an add demultiplexer having a plurality of output ports for demultiplexing an output signal of the add multiplexer to the plurality of output ports;
characterized in that:
- each drop sub-module further comprises a further drop demultiplexer having a plurality of output ports for demultiplexing an input signal from a respective connected degree into a plurality of output signals, wherein one of the output ports of the further drop demultiplexer is connected to one of the input ports of the drop multiplexer; and
- each add sub-module further comprises a further add multiplexer having a plurality of input ports for multiplexing a plurality of input signals into an output signal to a respective connected degree, wherein one of the input ports of the further add multiplexer is connected to one of the output ports of the add demultiplexer.

In a further aspect of the invention, a method of establishing a multi-degree colorless directionless reconfigurable optical add drop multiplexer system is provided.

The method may comprise:
- providing a plurality of degrees, each of the degrees having:
   a demultiplexer having an input port for a wavelength multiplexed input signal and a plurality of output ports for demultiplexing the wavelength multiplexed input signal into a plurality of demultiplexed output signals, and
   a multiplexer having an output port for a wavelength multiplexed output signal and a plurality of input ports for multiplexing a plurality of input signals into the wavelength multiplexed output signal;
- providing a plurality of add-drop modules each comprising an add sub-module and a drop sub-module,
each drop sub-module comprising a drop demultiplexer having a plurality of drop ports and a drop multiplexer having a plurality of input ports for multiplexing a plurality of input signals into an output signal provided to the drop demultiplexer,
each add sub-module comprising an add multiplexer having a plurality of add ports and an add demultiplexer having a plurality of output ports for demultiplexing an output signal of the add multiplexer to the plurality of output ports;
characterized by:
- selectively connecting each of the degrees to a respective one of the add-drop modules;
- further providing, in each drop sub-module, a further drop demultiplexer having a plurality of output ports for demultiplexing an input signal from a respective connected degree into a plurality of output signals, wherein one of the output ports of the further drop demultiplexer is connected to one of the input ports of the drop multiplexer;
- further providing, in each add sub-module, a further add multiplexer having a plurality of input ports for multiplexing a plurality of input signals into an output signal to the respective connected degree, wherein one of the input ports of the further add multiplexer is connected to one of the output ports of the add demultiplexer; and
- interconnecting each of the add-drop modules to each of the other add-drop modules by:
   connecting one of the output ports of the further drop demultiplexer of the respective add-drop module to one of the input ports of the drop multiplexer of the other add-drop module, and
   connecting one of the output ports of the add demultiplexer of the respective add-drop module to one of the input ports of the further add multiplexer of the other add-drop module.

The above measures provide a CD ROADM system in which 'directionless' is established as follows. Namely, instead of connecting each degree with each add-drop module in the manner as described in the background section, each degree is selectively connected to a respective add-drop module. Here, the adjective *'selective'* may be interpreted as *'only'.* As such, each degree may only be connected to its corresponding add-drop module. The degrees are thus not connected to the add-drop modules in accordance with a 'full-mesh' configuration, thereby freeing-up ports of the degrees and allowing the use of N degrees in a ROADM comprising an N port WSS.

To nevertheless enable the traffic from any degree to be routed to any of the add-drop modules, a novel type of add-drop module is provided. Namely, the add-drop module may comprise, in addition to a drop demultiplexer having a plurality of drop ports and a drop multiplexer having a plurality of input ports for multiplexing a plurality of input signals into an output signal provided to the drop demultiplexer, also a further drop demultiplexer which is, with its input port, connected to a respective degree and which is, with at least one of its output ports, connected to an input port of the drop multiplexer. The drop demultiplexer, the drop multiplexer and the further drop demultiplexer may together form a drop sub-module of the add-drop module.

Similarly, the add-drop module may comprise, in addition to an add multiplexer having a plurality of add ports and an add demultiplexer having a plurality of output ports for demultiplexing an output signal of the add multiplexer to the plurality of output ports, also a further add multiplexer which is, with one of its input ports, connected to one of the output ports of the add demultiplexer and - with its output port - to a respective degree. The add multiplexer, the add demultiplexer and the further add multiplexer may together form an add sub-module of the add-drop module.

This novel type of add-drop modules may be interconnected to each other to enable traffic flow between the add-drop modules. Specifically, each of the add-drop modules may be interconnected to each of the other add-drop modules, thereby forming a full-mesh of interconnections. For that purpose, the drop sub-modules may be interconnected in the above-stated manner, thereby utilizing the input ports of the drop multiplexers, the output ports of the add demultiplexers, the output ports of the newly provided 'further' drop demultiplexer and of the input ports of the newly provided 'further' add multiplexer. Thereby, the add-drop modules are interconnected, enabling traffic flow between the add-drop modules. In particular, the interconnections between the add-drop modules may be such that each add-drop module may be directly reached from any of the add-drop modules. Accordingly, traffic may flow from any degree to its corresponding add-drop module, and then via the interconnections between the add-drop modules directly to any other add-drop module.

Essentially, compared to known types of add-drop modules each having a drop multiplexer connected to a drop demultiplexer and an add demultiplexer connected to an add multiplexer, this novel type of add-drop module comprises an extra layer towards the degree which is comprised of a further drop demultiplexer and a further add multiplexer and which is provided to enable the interconnections between the add-drop modules. It is noted that this layer is described to be part of the add-drop module. It will be appreciated, however, that this layer may also be described as a separate layer in between the known types of add-drop modules and the degrees.

This manner of establishing 'directionless' may have various advantages. For example, fewer ports may be needed at the degrees since each degree may be connected only to one add-drop module. For example, in a N-degree configuration of the CD ROADM as claimed, 1 port of each degree's demultiplexer and 1 port of each degree's multiplexer may suffice for interconnections with the add-drop modules, whereas N-1 ports may be needed to interconnect the degrees themselves in accordance with a full-mesh configuration. This means that each degree may need to provide a multiplexer and a demultiplexer each having at least N ports, which is considerably less than the 2N-1 ports of the known architecture. For example, for a 4-degree CD ROADM system, 4 rather than 7 ports are needed for a full-mesh configuration, whereas for a 10-degree CD ROADM system, 10 rather than 19 ports are needed. Another advantage is that a later addition of a degree, e.g., by means of an upgrade, only represents an 'added cost' of 1 instead of 2 ports.
Such an architecture is better scalable to a high number of degrees as the number of ports scales approximately only by half of the scaling of the known architecture.

A specific advantage of using the aforementioned 'extra layer' of a further drop demultiplexer and a further add multiplexer may be that the drop ports of the drop demultiplexer and the add ports of the add multiplexer do not need to be used to establish the interconnections between the add-drop modules. When otherwise using a number of drop ports and add ports for such interconnections, this would prevent the use of these ports for respectively dropping and adding traffic and may necessitate the use of a cascade of (de)multiplexers, or a more extensive cascade of (de)multiplexers.

Of course, it is noted that in certain use-cases, it may not be needed for each add-drop module to be directly reachable from each of the other add-drop modules. In such use-cases, it may suffice if, for example, only a subset of the add-drop modules is interconnected in the described manner to enable each add-drop module within the subset to be directly reachable from each of the other add-drop modules within the subset. As such, any of the above references to 'any' and 'each' may be understood as applying to this subset. It is further noted that in the above and following, the term 'one' is not to be understood as 'only one', unless noted or implied.

In an embodiment, each of the degrees may be interconnected to each of the other degrees by an output port of the demultiplexer of the respective degree being connected to an input port of the multiplexer of each of the other degrees. The degrees themselves may thus be interconnected in accordance with a 'full-mesh' configuration. In this embodiment, a full-mesh is established between the degrees, a full-mesh is established between the add-drop modules, while the degrees are only selectively connected to the add-drop modules, e.g., one degree to one add-drop module.

In an embodiment,
- at least one of the multiplexers and the demultiplexers of the degrees is a wavelength selective switch; and/or
- at least one of the multiplexers and the demultiplexers of the add-drop modules is a wavelength selective switch.

In an embodiment,
- the add multiplexer is represented by a cascade of at least two multiplexers; and/or
- the drop demultiplexer is represented by a cascade of at least two demultiplexers

A single WSS may not always suffice to provide a sufficient number of drop (or add) ports to allow a desired number of wavelengths to be dropped (or added). Accordingly, the drop demultiplexer may comprise a plurality of WSS which are mutually interconnected, e.g., via a cascade, so as to establish a drop demultiplexer having more drop ports than those provided by a single WSS. Similarly, the add multiplexer may comprise a plurality of WSS which are mutually interconnected, e.g., via a cascade, so as to provide an add multiplexer having more add ports than those provided by a single WSS. Any reference to 'drop demultiplexer' and 'add multiplexer' is thus to be understood as including the use of such a respective plurality of WSSs which are mutually interconnected. It is noted that such a cascade may comprise multiple WSS arranged in parallel behind a first WSS. It is further noted that the above also applies to (de)multiplexers other than WSS, such as passive splitters.

In a further aspect of the invention, a method may be provided for re-configuring the system as described above in any of the embodiments.

For example, the system may comprise:
- a plurality of degrees, each of the degrees having:
   a demultiplexer having an input port for a wavelength multiplexed input signal and a plurality of output ports for demultiplexing the wavelength multiplexed input signal into a plurality of demultiplexed output signals, and
   a multiplexer having an output port for a wavelength multiplexed output signal and a plurality of input ports for multiplexing a plurality of input signals into the wavelength multiplexed output signal;
- a plurality of add-drop modules each comprising an add sub-module and a drop sub-module,
wherein each drop sub-module comprises a drop demultiplexer having a plurality of drop ports and a drop multiplexer having a plurality of input ports for multiplexing a plurality of input signals into an output signal provided to the drop demultiplexer,
wherein each add sub-module comprises an add multiplexer having a plurality of add ports and an add demultiplexer having a plurality of output ports for demultiplexing an output signal of the add multiplexer to the plurality of output ports;
characterized in that:
- each of the degrees is selectively connected to a respective one of the add-drop modules;
- each drop sub-module further comprises a further drop demultiplexer having a plurality of output ports for demultiplexing an input signal from a respective connected degree into a plurality of output signals, wherein one of the output ports of the further drop demultiplexer is connected to one of the input ports of the drop multiplexer;
- each add sub-module further comprises a further add multiplexer having a plurality of input ports for multiplexing a plurality of input signals into an output signal to a respective connected degree, wherein one of the input ports of the further add multiplexer is connected to one of the output ports of the add demultiplexer; and
- each of the add-drop modules is interconnected to each of the other add-drop modules by:
   one of the output ports of the further drop demultiplexer of a respective add-drop module being connected to one of the input ports of the drop multiplexer of the other add-drop module, and
   one of the output ports of the add demultiplexer of the respective add-drop module being connected to one of the input ports of the further add multiplexer of the other add-drop module.

The method may comprise reconfiguring one or more multiplexers and/or demultiplexers of the system to re-route network traffic designated to be dropped via a designated add-drop module which is connected to a particular degree to flow via:
i) another degree, and then
ii) the add-drop module connected to the other degree, and then
iii) the interconnections between the add-drop modules,
to the designated add-drop module.

As is known per se, the multiplexers and demultiplexers of a ROADM system may be remotely configurable and may thus be configured to enable traffic to be routed from any degree to the add-drop module of any other degree.

In a further aspect of the invention, a transitory or non-transitory computer-readable medium may be provided which comprises a computer program comprising instructions for causing a processor system to perform the method.

It will be appreciated by those skilled in the art that two or more of the above-mentioned embodiments, implementations, and/or aspects of the invention may be combined in any way deemed useful.

Modifications and variations of any method, computer program or add-drop module, which correspond to the described modifications and variations of the system, and vice versa, may be carried out by a person skilled in the art on the basis of the present description.

### BRIEF DESCRIPTION OF THE DRAWINGS

These and other aspects of the invention are apparent from and will be elucidated with reference to the embodiments described hereinafter. In the drawings,
Fig. 1 shows a colorless directionless ROADM system comprising a plurality of degrees and a plurality of add-drop modules, in which each degree is connected with each other degree and selectively with a respective one of the add-drop modules;
Fig. 2A shows one of the add-drop modules in more detail, with the depicted add-drop module being exemplary for the other add-drop modules of the system;
Fig. 2B illustrates the interconnection of add-drop modules, specifically showing how the drop sub-modules of the add-drop modules are interconnected;
Fig. 2C illustrates the interconnection of add-drop modules, specifically showing how the add sub-modules of the add-drop modules are interconnected;
Fig. 2D shows all interconnection between the add-drop modules;
Fig. 3 corresponds to Fig. 1 while additionally showing the interconnections of the add-drop modules as shown individually in Figs. 2B-2D;
Fig. 4 shows a method of establishing a colorless directionless ROADM system as shown in Figs. 1-3;
Fig. 5 shows a computer readable medium comprising non-transitory data comprising instructions for causing a processor system to perform the method; and
Fig. 6 shows an exemplary data processing system.

It should be noted that items which have the same reference numbers in different figures, have the same structural features and the same functions, or are the same signals. Where the function and/or structure of such an item has been explained, there is no necessity for repeated explanation thereof in the detailed description.

### List of reference and abbreviations

The following list of references and abbreviations is provided for facilitating the interpretation of the drawings and shall not be construed as limiting the claims.
- 100ROADM: system

- D1-D3: degrees
- P1: degree plane
- P2: add-drop plane
- AD1-AD3: add-drop modules
- A1-A3: add sub-modules
- DR1-DR3: drop sub-modules
- WSS: wavelength selective switch

- 10: demultiplexer of degree
- 12: input port of demultiplexer
- 14: output ports of demultiplexer

- 20: multiplexer of degree
- 22: input ports of multiplexer
- 24: output port of multiplexer

- 30: multiplexer of drop sub-module
- 32: input ports of multiplexer
- 40: demultiplexer of drop sub-module
- 42: output ports of demultiplexer, drop ports of add-drop module
- 50: multiplexer of add sub-module
- 52: input ports of multiplexer, add ports of add-drop module
- 60: demultiplexer of add sub-module
- 62: output ports of demultiplexer

- 35(')("): (further) drop demultiplexer of drop sub-module
- 37: output ports of drop demultiplexer
- 55(')("): (further) add multiplexer of add sub-module
- 57: output ports of add multiplexer

- 70, 72: connection between degrees
- 75, 77: connection between degree and add-drop module
- 80, 81-86: connection between drop sub-module of add-drop modules
- 90, 91-96: connection between add sub-modules of add-drop modules

- 200: method of establishing CD ROADM system
- 210: providing plurality of degrees
- 220: providing add-drop modules
- 230: providing further drop demultiplexers
- 240: providing further add multiplexers
- 250: selectively connecting degrees with add-drop modules
- 260: interconnecting add-drop modules

- 300: computer readable medium
- 310: non-transitory data

- 1000: exemplary data processing system
- 1002: processor
- 1004: memory element
- 1006: system bus
- 1008: local memory
- 1010: bulk storage device
- 1012: input device
- 1014: output device
- 1016: network adapter
- 1018: application

### DETAILED DESCRIPTION OF EMBODIMENTS

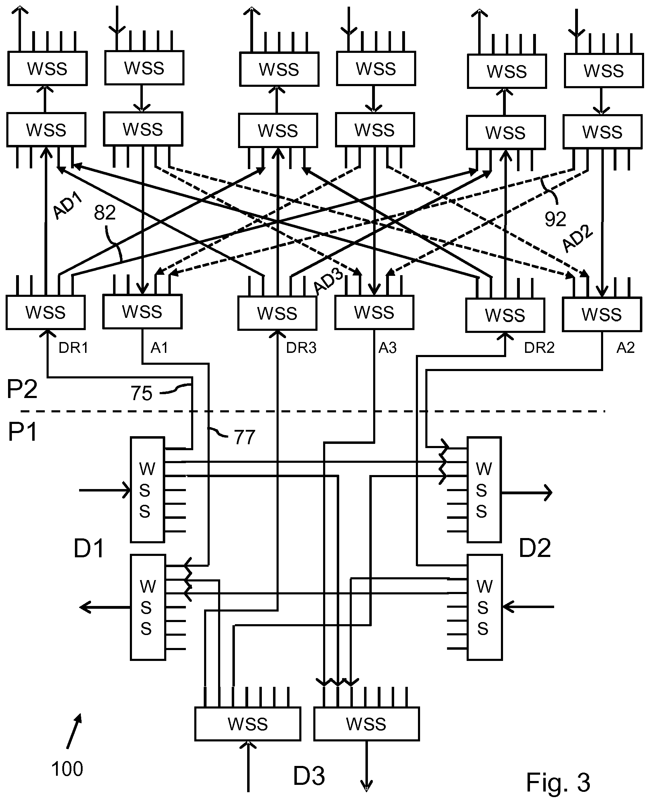

The following describes various embodiments of the CD ROADM system as claimed, which are by way of example described in a 3-degree configuration and which may be readily extended to any number of degrees based on this description. To avoid overly complex figures, the interconnections between degrees and add-drop modules are shown in different figures than the interconnections between the add-drop modules. Only Fig. 3 shows both types of interconnections for a 3-degree configuration.

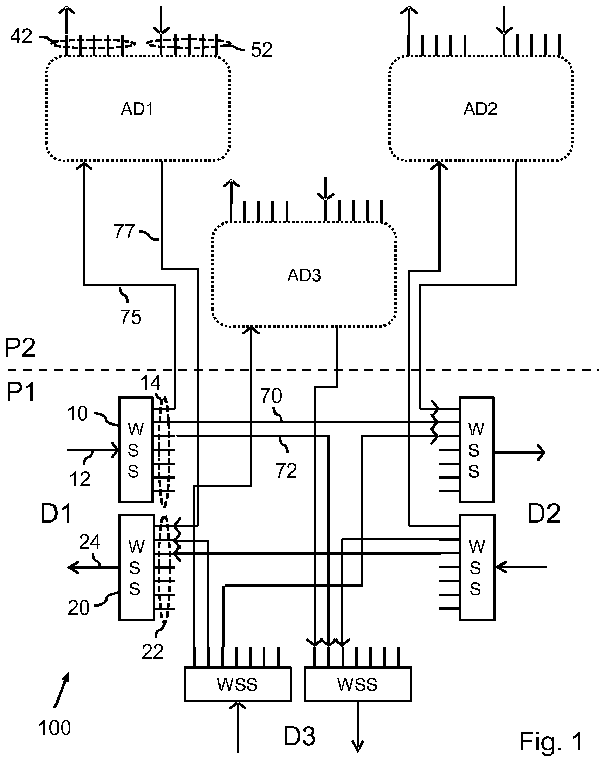

Fig. 1 shows part of a 3-degree ROADM system 100 in which three degrees D1-D3 are provided in a degree plane P1. The following explanation refers to degree D1. However, this explanation may equally apply to the degrees D2, D3, mutatis mutandis. The degree D1 is shown to comprise a demultiplexer 10 and a multiplexer 20. The demultiplexer 10 is shown to comprise an input port 12 for a wavelength multiplexed input signal and a plurality of output ports 14 for demultiplexing the wavelength multiplexed input signal into a plurality of demultiplexed output signals. It is noted that in Fig. 1 and others, connection arrows terminating at or originating from (de)multiplexers denote the presence of input/output ports, without such ports being separately drawn. The demultiplexer 10 is by way of illustration shown to have seven output ports 14, i.e., the demultiplexer 10 is an 1x7 demultiplexer, but may also have any other suitable number of output ports, for example 4, 9, 20, or 32 ports. The same applies to the number of ports of any other described (de)multiplexer and/or WSS. Furthermore, the multiplexer 20 is shown to comprise an output port 24 for a wavelength multiplexed output signal and a plurality of input ports 22 for multiplexing a plurality of input signals into the wavelength multiplexed output signal.

The degrees D1-D3 may be interconnected, for example by a full-mesh as shown in Fig. 1. Here, an output port of degree D1's demultiplexer may be connected to an input port of degree D2's multiplexer, as shown in Fig. 1 by arrow 70, and another output port of degree D1's demultiplexer may be connected to an input port of degree D3's multiplexer, as shown by arrow 72. The same type of connections may be provided from D2 to D1 and D3, and from D3 to D1 and D2, mutatis mutandis. Accordingly, traffic may be routed from any degree to any other degree.

Fig. 1 further shows three add-drop modules AD1-AD3 in an add-drop plane P2. The degrees D1-D3 are shown to be selectively connected to the add-drop modules AD1-AD3. Namely, each degree is shown to be only connected to a corresponding one of the add-drop modules, e.g., degree D1 to add-drop module AD1, degree D2 to add-drop module AD2 and degree D3 to add-drop module AD3.

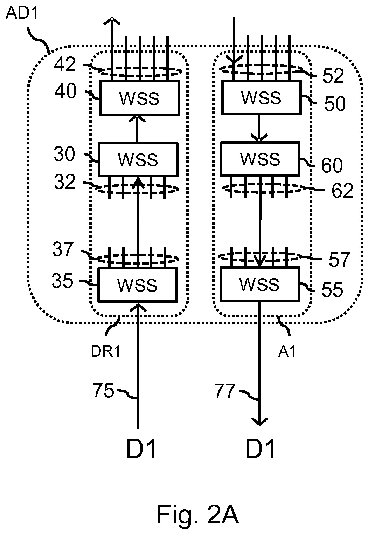

Fig. 2A shows one of the add-drop modules in more detail, namely AD1. However, Fig. 2A and the following explanation may equally apply to the add-drop modules AD2, AD3, mutatis mutandis. The add-drop module AD1 is shown to comprise a drop sub-module DR1 and an add sub-module A1. The drop sub-module DR1 is shown to comprise a drop demultiplexer 40 having a plurality of drop ports 42. In addition, a drop multiplexer 30 is provided in front of the drop demultiplexer 40, with the drop multiplexer 30 having a plurality of input ports 32. Here, '*in front of'* refers to the drop demultiplexer 40 receiving the output of the drop multiplexer 30 as input. Moreover, the add sub-module A1 is shown to comprise an add multiplexer 50 having a plurality of add ports 52. In addition, an add demultiplexer 60 is provided behind the add multiplexer 50, with the add demultiplexer 60 having a plurality of output ports 62. Here, *'behind'* refers to the add demultiplexer 60 receiving the output of the add multiplexer 50 as input. Furthermore, the drop sub-module D1 is shown to comprise a further drop demultiplexer 35 having a plurality of output ports 37 for demultiplexing an input signal 75 from a respective connected degree, being in this example D1, into a plurality of output signals. As shown in Fig. 2A, one of the output ports 37 of the further drop demultiplexer 35 is connected to one of the input ports 32 of the drop multiplexer 30. Similarly, the add sub-module A1 is shown to comprise a further add multiplexer 55 having a plurality of input ports 57 for multiplexing a plurality of input signals into an output signal 77 to a respective connected degree, being in this example D1. As shown in Fig. 2A, one of the input ports 57 of the further add multiplexer 55 is connected to one of the output ports 62 of the add demultiplexer 60. It is noted that in the above and following, the adjectives 'add' and *'drop'* are used to identify the respective (de)multiplexers as belonging to either the add sub-module A1 or the drop sub-module DR1. No other technical considerations are implied by the mere use of said adjectives.

The degrees D1-D3 were shown to be selectively connected to the add-drop modules AD1-AD3. Namely, in the embodiment shown in Fig. 1, each degree is only connected to a corresponding one of the add-drop modules. More specifically and with joint reference to Fig. 1 and Fig. 2A, degree D1 is shown to be connected to add-drop module AD1 by an output port of the demultiplexer 10 of degree D1 being connected to the input port of the (further) drop demultiplexer 35 of add-drop module AD1, as shown by arrow 75 in Fig. 1 and 2A. In addition, the output port of the (further) add multiplexer 55 of add-drop module AD1 is shown to be connected to an input port of the multiplexer 20 of degree D1, as shown by arrow 77. Moreover, degree D1 lacks any direct connection to add-drop module AD2 and add-drop module AD3.

In a same or similar manner as described above for degree D1 and add-drop module AD1, degree D2 may be connected to add-drop module AD2 and degree D3 may be connected to add-drop module AD3, mutatis mutandis.

It is noted that in the above and following embodiments, the demultiplexers and the multiplexers are each embodied by Wavelength Selective Switches (WSS). However, this is not a limitation, as any other type of (de)multiplexer may be used instead. For example, for the drop demultiplexer 40, a passive splitter may be used.

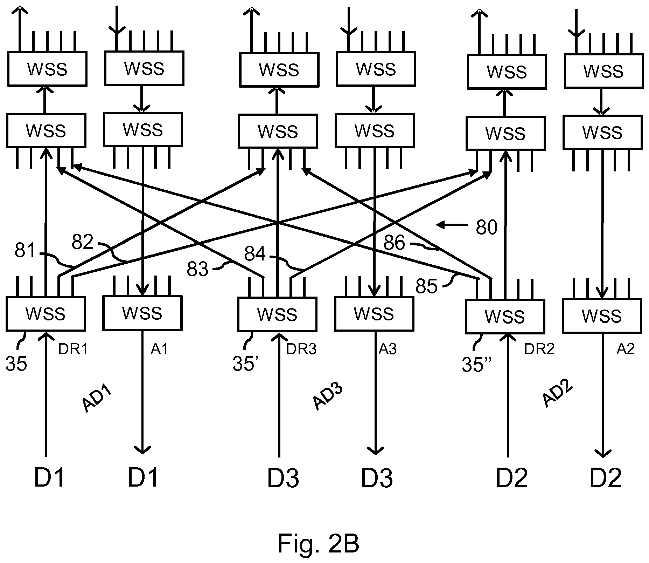

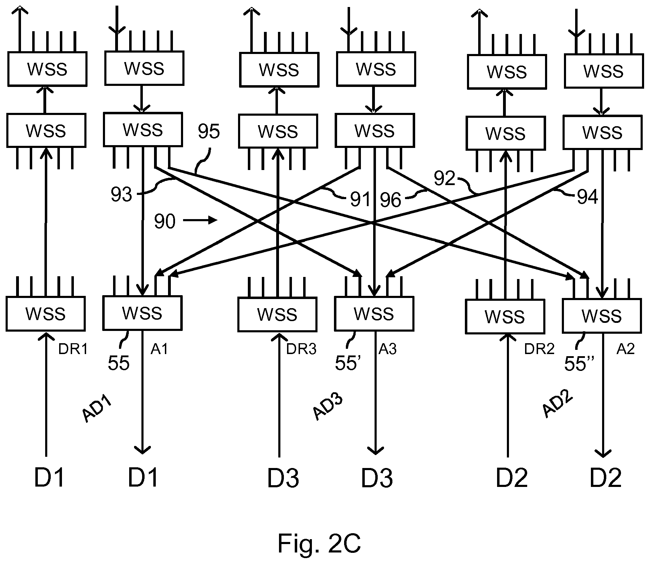

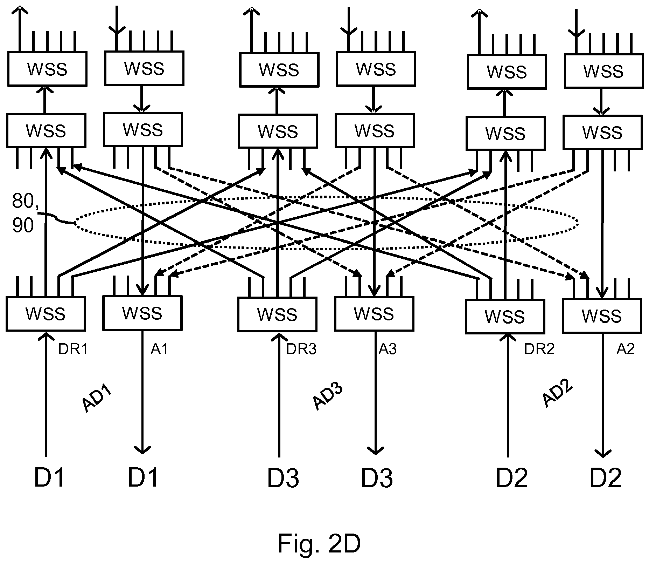

Figs. 2B-2D illustrate the interconnections between the add-drop modules AD1-AD3 of Fig. 1 by showing the add-drop plane P2 of Fig. 1 in more detail while omitting the degree plane P1. In particular, Figs. 2B-2D show an embodiment in which the add-drop modules AD1-AD3 are interconnected in accordance with a full-mesh, with Fig. 2B showing the interconnections between the drop sub-modules DR1-DR3 and Fig. 2C showing the interconnections between the add sub-modules A1-A3 and Fig. 2D showing all interconnections between the add-drop modules AD1-AD3.

In Fig. 2B, it can be seen that an output port of the drop demultiplexer 35 of add-drop module AD1 is connected to an input port of the drop multiplexer of add-drop module AD3, as shown in Fig. 2B by arrow 81, and that another output port of the drop demultiplexer 35 of add-drop module AD1 is connected to an input port of the drop multiplexer of add-drop module AD2, as shown in Fig. 2B by arrow 82. The drop demultiplexers 35', 35" of the add-drop modules AD2, AD3 are interconnected to the drop multiplexers of the other add-drop modules in a systematically same manner by way of interconnections 83, 84 for AD3 and interconnections 85, 86 for AD2. Accordingly, the drop sub-modules DR1-DR3 are interconnected by a full-mesh, in that each drop sub-module is directly connected to each of the other drop sub-modules.

Fig. 2C shows a similar full-mesh formed between the add sub-modules A1-A3 of the add-drop modules AD1-AD3. Namely, it can be seen that an output port of the add demultiplexer of add-drop module AD3 is connected to an input port of the add multiplexer 55 of add-drop module AD1, as shown by arrow 91, and that an output port of the add demultiplexer of add-drop module AD2 is connected to another input port of the add multiplexer 55 of add-drop module AD1, as shown by arrow 92. The add multiplexers 55', 55" of the add-drop modules AD2, AD3 are interconnected to the add demultiplexers of the other add-drop modules in a systematically same manner by way of interconnections 93, 94 for AD3 and interconnections 95, 96 for AD2. Accordingly, the add sub-modules A1-A3 are interconnected by a full-mesh, in that each add sub-module is directly connected to each of the other add sub-modules.

Fig. 2D is a combination of Figs. 2B and 2C, showing all interconnection between the add-drop modules AD1-AD3. The add-drop modules AD-AD3 are thus shown to be interconnected by a full-mesh of interconnections 80 between the drop sub-modules DR1-DR3 and by a full-mesh of interconnections 90 between the add sub-modules A1-A3. Here and in Fig. 3, for sake of legibility, the interconnections between the add sub-modules are indicated by dashed arrows and the interconnections between the drop sub-modules are indicated by solid arrows.

Fig. 3 is a combination of Fig. 1 and Fig. 2D, showing the CD ROADM system 100 with interconnections between the degrees D1-D3 and interconnections between the add-drop modules AD1-AD3, with the former being a full-mesh and the latter also being a full-mesh, while the degrees are only selectively interconnected to the add-drop modules, e.g., degree D1 only to add-drop module AD1, etc.

Traffic may thus be routed from a particular degree to a particular add or drop port in various ways. For example, to route traffic from the demultiplexer of degree D1 to a drop port of add-drop module AD2, the traffic may be routed from the demultiplexer via connection 75 to the drop sub-module DR1 of add-drop module AD1 and from there via connection 82 to the drop sub-module DR2 where it may be dropped via one of the drop ports. Another example is that traffic which is added via an add port of add-drop module AD2 may be routed to degree D1 via connection 92 to the add-drop module AD1 and from there via connection 77 to degree D1's multiplexer.

With further reference to Figs. 1-3 and considering the multiplexers and demultiplexers of the ROADM system normally being remotely configurable, these may be configured to enable traffic to be routed from any degree to the add-drop module of any other degree. For example, one or more multiplexers and/or demultiplexers of the system may be reconfigured to re-route network traffic designated to be dropped via a designated add-drop module which is connected to a particular degree to flow via i) another degree, and then ii) the add-drop module connected to the other degree, and then iii) the interconnections between the add-drop modules, to the designated add-drop module. For example, when considering the 3-degree system of Fig. 3 and an example in which traffic is to be dropped at AD2 (representing the 'designated' add-drop module), it may not be possible to route the traffic via D2 to AD2. For example, there may be a technical malfunction at D2. In such a case, the traffic may be routed via another degree, e.g., D1, and its add-drop module AD1 (the 'other' degree and the 'other' add-drop module) and then via the interconnection 90 from DR1 to DR2 and thereby from AD1 to AD2. It will be appreciated that this rerouting also applies for network traffic added at a particular add-drop module (e.g., AD1) which is to be routed to a destination. If the degree (D1) is unavailable, the traffic may be routed to another add-drop module (e.g., AD2) and then via its degree (D2) to the destination.

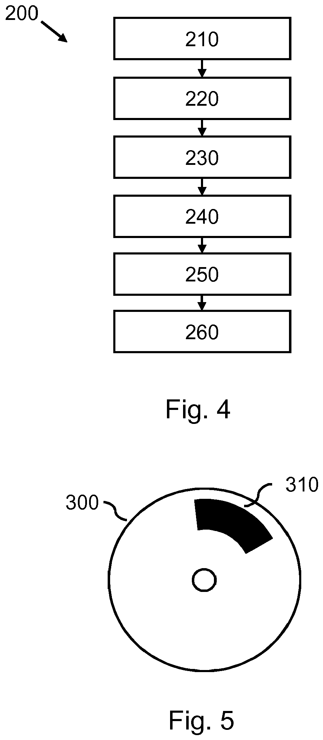

Fig. 4 shows a method 200 of establishing a CD ROADM system as shown in Figs. 1-3. The method 200 may comprise, in a step titled "PROVIDING PLURALITY OF DEGREES", providing 210 a plurality of degrees, for example, as described with reference to Figs. 1-3. The method 200 may further comprise, in a step titled "PROVIDING ADD-DROP MODULES", providing 220 a plurality of add-drop modules, each comprising an add sub-module and a drop sub-module, each drop sub-module comprising a drop demultiplexer having a plurality of drop ports and a drop multiplexer having a plurality of input ports for multiplexing a plurality of input signals into an output signal provided to the drop demultiplexer, each add sub-module comprising an add multiplexer having a plurality of add ports and an add demultiplexer having a plurality of output ports for demultiplexing an output signal of the add multiplexer to the plurality of output ports. The method 200 may further comprise, in a step titled "SELECTIVELY CONNECTING DEGREES WITH ADD-DROP MODULES", selectively connecting 250 each of the degrees to a respective one of the add-drop modules. The method 200 may further comprise, in a step titled "PROVIDING FURTHER DROP DEMULTIPLEXERS", providing 230, in each drop sub-module, a further drop demultiplexer having a plurality of output ports for demultiplexing an input signal from a respective connected degree into a plurality of output signals, wherein one of the output ports of the further drop demultiplexer is connected to one of the input ports of the drop multiplexer. The method 200 may further comprise, in a step titled "PROVIDING FURTHER ADD MULTIPLEXERS", providing 240, in each add sub-module, a further add multiplexer having a plurality of input ports for multiplexing a plurality of input signals into an output signal to a respective connected degree, wherein one of the input ports of the further add multiplexer is connected to one of the output ports of the add demultiplexer. The method 200 may further comprise, in a step titled "INTERCONNECTING ADD-DROP MODULES", interconnecting 260 the add-drop modules to each of the other add-drop modules by connecting one of the output ports of the further drop demultiplexer of a respective add-drop module to one of the input ports of the drop multiplexer of the other add-drop module, and connecting one of the output ports of the add demultiplexer of the respective add-drop module to one of the input ports of the further add multiplexer of the other add-drop module.

It will be appreciated that the above and following method steps may be performed in any suitable order, e.g., consecutively, simultaneously, or a combination thereof, subject to, where applicable, a particular order being necessitated.

It is noted that any of the methods described in this specification, for example in any of the claims, may be implemented on a computer as a computer implemented method, as dedicated hardware, or as a combination of both. Instructions for the computer, e.g., executable code, may be stored on a computer readable medium 300 as for example shown in Fig. 5, e.g., in the form of a series 310 of machine readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 5 shows by way of example an optical storage device 300.

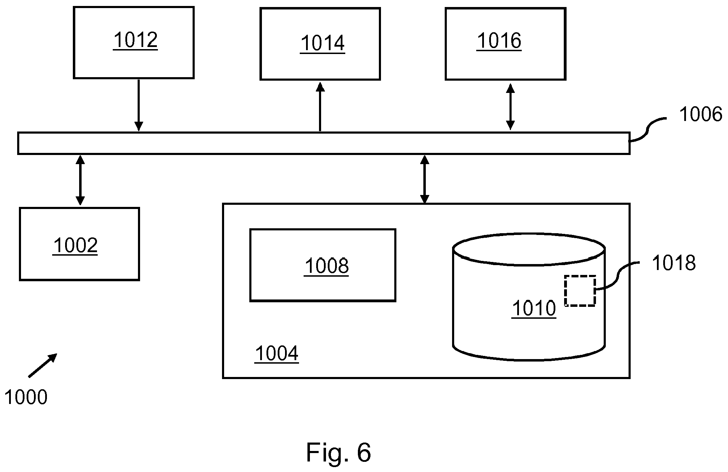

Fig. 6 is a block diagram illustrating an exemplary data processing system 1000 that may be used in the embodiments described in this specification. Such data processing systems include data processing entities described in this specification, including but not limited to a control part of the ROADM systems and computers and computer systems executing any of the methods described in this specification.

The data processing system 1000 may include at least one processor 1002 coupled to memory elements 1004 through a system bus 1006. As such, the data processing system may store program code within memory elements 1004. Furthermore, processor 1002 may execute the program code accessed from memory elements 1004 via system bus 1006. In one aspect, data processing system may be implemented as a computer that is suitable for storing and/or executing program code. It should be appreciated, however, that data processing system 1000 may be implemented in the form of any system including a processor and memory that is capable of performing the functions described within this specification.

The memory elements 1004 may include one or more physical memory devices such as, for example, local memory 1008 and one or more bulk storage devices 1010. Local memory may refer to random access memory or other non-persistent memory device(s) generally used during actual execution of the program code. A bulk storage device may be implemented as a hard drive, solid state disk or other persistent data storage device. The data processing system 1000 may also include one or more cache memories (not shown) that provide temporary storage of at least some program code in order to reduce the number of times program code is otherwise retrieved from bulk storage device 1010 during execution.

Input/output (I/O) devices depicted as input device 1012 and output device 1014 optionally can be coupled to the data processing system. Examples of input devices may include, but are not limited to, for example, a microphone, a keyboard, a pointing device such as a mouse, or the like. Examples of output devices may include, but are not limited to, for example, a monitor or display, speakers, or the like. Input device and/or output device may be coupled to data processing system either directly or through intervening I/O controllers. A network adapter 1016 may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system 1000.

As shown in Fig. 6, memory elements 1004 may store an application 1018. It should be appreciated that data processing system 1000 may further execute an operating system (not shown) that can facilitate execution of the application. The application, being implemented in the form of executable program code, can be executed by data processing system 1000, e.g., by processor 1002. Responsive to executing the application, the data processing system may be configured to perform one or more operations to be described herein in further detail.

For example, data processing system 1000 may represent a control part of the ROADM systems as described with reference to Figs. 1-3 and others. In that case, application 1018 may represent an application that, when executed, configures data processing system 1000 to perform the functions described with reference to said control. Data processing system 1000 may also represent a computer for executing any of the methods described in this specification. In that case, application 1018 may represent an application that, when executed, configures data processing system 1000 to perform the functions described with reference to said computer or method.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A multi-degree colorless directionless reconfigurable optical add drop multiplexer (CD ROADM) system (100), the system comprising:
- a plurality of degrees (D1-D3), each of the degrees having:
a demultiplexer (10) having an input port (12) for a wavelength multiplexed input signal and a plurality of output ports (14) for demultiplexing the wavelength multiplexed input signal into a plurality of demultiplexed output signals, and
a multiplexer (20) having an output port (24) for a wavelength multiplexed output signal and a plurality of input ports (22) for multiplexing a plurality of input signals into the wavelength multiplexed output signal;
- a plurality of add-drop modules (AD1-AD3) each comprising an add sub-module (A1-A3) and a drop sub-module (DR1-DR3),
wherein each drop sub-module (DR1-DR3) comprises a drop demultiplexer (40) having a plurality of drop ports (42) and a drop multiplexer (30) having a plurality of input ports (32) for multiplexing a plurality of input signals into an output signal provided to the drop demultiplexer,
wherein each add sub-module (A1-A3) comprises an add multiplexer (50) having a plurality of add ports (52) and an add demultiplexer (60) having a plurality of output ports (62) for demultiplexing an output signal of the add multiplexer to the plurality of output ports;
**characterized in that**:
- each of the degrees (D1-D3) is selectively connected to a respective one of the add-drop modules (AD1-AD3);
- each drop sub-module (DR1-DR3) further comprises a further drop demultiplexer (35) having a plurality of output ports (37) for demultiplexing an input signal (75) from a respective connected degree (D1-D3) into a plurality of output signals, wherein one of the output ports (37) of the further drop demultiplexer (35) is connected to one of the input ports (32) of the drop multiplexer (30);
- each add sub-module (A1-A3) further comprises a further add multiplexer (55) having a plurality of input ports (57) for multiplexing a plurality of input signals into an output signal (77) to the respective connected degree (D1-D3), wherein one of the input ports (57) of the further add multiplexer (55) is connected to one of the output ports (62) of the add demultiplexer (60); and
- each of the add-drop modules (AD1-AD3) is interconnected to each of the other add-drop modules by:
one of the output ports (37) of the further drop demultiplexer (35) of the respective add-drop module being connected (80, 81-86) to one of the input ports (32) of the drop multiplexer (30) of the other add-drop module, and
one of the output ports (62) of the add demultiplexer (60) of the respective add-drop module being connected (90, 91-96) to one of the input ports (57) of the further add multiplexer (55) of the other add-drop module.

2. The system (100), wherein each of the degrees (D1-D3) is interconnected (70, 72) to each of the other degrees to form a full mesh of interconnections, wherein an output port of the demultiplexer of the respective degree is connected to an input port of the multiplexer of each of the other degrees.

3. The system (100) according to claim 1 or 2, wherein:
- at least one of the multiplexers (20) and the demultiplexers (10) of the degrees (D1-D3) is a wavelength selective switch (WSS); and/or
- at least one of the multiplexers (50, 55, 60) and the demultiplexers (30, 35, 40) is a wavelength selective switch (WSS).

4. The system (100) according to any one of claims 1 to 3, wherein:
- the add multiplexer (50) is represented by a cascade of at least two multiplexers; and/or
- the drop demultiplexer (40) is represented by a cascade of at least two demultiplexers.

5. A transport network comprising a multi-degree colorless directionless reconfigurable optical add drop multiplexer (CD ROADM) system (100), the system comprising:
- a plurality of degrees (D1-D3), each of the degrees having:
a demultiplexer (10) having an input port (12) for a wavelength multiplexed input signal and a plurality of output ports (14) for demultiplexing the wavelength multiplexed input signal into a plurality of demultiplexed output signals, and
a multiplexer (20) having an output port (24) for a wavelength multiplexed output signal and a plurality of input ports (22) for multiplexing a plurality of input signals into the wavelength multiplexed output signal;
- a plurality of add-drop modules (AD1-AD3) each comprising an add sub-module (A1-A3) and a drop sub-module (DR1-DR3),
wherein each drop sub-module (DR1-DR3) comprises a drop demultiplexer (40) having a plurality of drop ports (42) and a drop multiplexer (30) having a plurality of input ports (32) for multiplexing a plurality of input signals into an output signal provided to the drop demultiplexer,
wherein each add sub-module (A1-A3) comprises an add multiplexer (50) having a plurality of add ports (52) and an add demultiplexer (60) having a plurality of output ports (62) for demultiplexing an output signal of the add multiplexer to the plurality of output ports;
**characterized in that**:
- each of the degrees (D1-D3) is selectively connected to a respective one of the add-drop modules (AD1-AD3);
- each drop sub-module (DR1-DR3) further comprises a further drop demultiplexer (35) having a plurality of output ports (37) for demultiplexing an input signal (75) from a respective connected degree (D1-D3) into a plurality of output signals, wherein one of the output ports (37) of the further drop demultiplexer (35) is connected to one of the input ports (32) of the drop multiplexer (30);
- each add sub-module (A1-A3) further comprises a further add multiplexer (55) having a plurality of input ports (57) for multiplexing a plurality of input signals into an output signal (77) to the respective connected degree (D1-D3), wherein one of the input ports (57) of the further add multiplexer (55) is connected to one of the output ports (62) of the add demultiplexer (60); and
- each of the add-drop modules (AD1-AD3) is interconnected to each of the other add-drop modules by:
one of the output ports (37) of the further drop demultiplexer (35) of the respective add-drop module being connected (80, 81-86) to one of the input ports (32) of the drop multiplexer (30) of the other add-drop module, and
one of the output ports (62) of the add demultiplexer (60) of the respective add-drop module being connected (90, 91-96) to one of the input ports (57) of the further add multiplexer (55) of the other add-drop module.

6. An add-drop module (AD1-AD3) for a multi-degree colorless directionless reconfigurable optical add drop multiplexer system, comprising:
- a drop sub-module (DR1-DR3) comprising a drop demultiplexer (40) having a plurality of drop ports (42) and a drop multiplexer (30) having a plurality of input ports (32) for multiplexing a plurality of input signals into an output signal provided to the drop demultiplexer; and
- an add sub-module (A1-A3) comprising an add multiplexer (50) having a plurality of add ports (52) and an add demultiplexer (60) having a plurality of output ports (62) for demultiplexing an output signal of the add multiplexer to the plurality of output ports;
**characterized in that**:
- each drop sub-module (DR1-DR3) further comprises a further drop demultiplexer (35) having a plurality of output ports (37) for demultiplexing an input signal (75) from a respective connected degree (D1-D3) into a plurality of output signals, wherein one of the output ports (37) of the further drop demultiplexer (35) is connected to one of the input ports (32) of the drop multiplexer (30); and
- each add sub-module (A1-A3) further comprises a further add multiplexer (55) having a plurality of input ports (57) for multiplexing a plurality of input signals into an output signal (77) to a respective connected degree (D1-D3), wherein one of the input ports (57) of the further add multiplexer (55) is connected to one of the output ports (62) of the add demultiplexer (60).

7. A method of reconfiguring a multi-degree colorless directionless reconfigurable optical add drop multiplexer (CD ROADM) system (100),
the system comprising:
- a plurality of degrees (D1-D3), each of the degrees having:
a demultiplexer (10) having an input port (12) for a wavelength multiplexed input signal and a plurality of output ports (14) for demultiplexing the wavelength multiplexed input signal into a plurality of demultiplexed output signals, and
a multiplexer (20) having an output port (24) for a wavelength multiplexed output signal and a plurality of input ports (22) for multiplexing a plurality of input signals into the wavelength multiplexed output signal;
- a plurality of add-drop modules (AD1-AD3) each comprising an add sub-module (A1-A3) and a drop sub-module (DR1-DR3),
wherein each drop sub-module (DR1-DR3) comprises a drop demultiplexer (40) having a plurality of drop ports (42) and a drop multiplexer (30) having a plurality of input ports (32) for multiplexing a plurality of input signals into an output signal provided to the drop demultiplexer,
wherein each add sub-module (A1-A3) comprises an add multiplexer (50) having a plurality of add ports (52) and an add demultiplexer (60) having a plurality of output ports (62) for demultiplexing an output signal of the add multiplexer to the plurality of output ports;
- each of the degrees (D1-D3) is selectively connected to a respective one of the add-drop modules (AD1-AD3);
- each drop sub-module (DR1-DR3) further comprises a further drop demultiplexer (35) having a plurality of output ports (37) for demultiplexing an input signal (75) from a respective connected degree (D1-D3) into a plurality of output signals, wherein one of the output ports (37) of the further drop demultiplexer (35) is connected to one of the input ports (32) of the drop multiplexer (30);
- each add sub-module (A1-A3) further comprises a further add multiplexer (55) having a plurality of input ports (57) for multiplexing a plurality of input signals into an output signal (77) to the respective connected degree (D1-D3), wherein one of the input ports (57) of the further add multiplexer (55) is connected to one of the output ports (62) of the add demultiplexer (60); and
- each of the add-drop modules (AD1-AD3) is interconnected to each of the other add-drop modules by:
one of the output ports (37) of the further drop demultiplexer (35) of the respective add-drop module being connected (80, 81-86) to one of the input ports (32) of the drop multiplexer (30) of the other add-drop module, and
one of the output ports (62) of the add demultiplexer (60) of the respective add-drop module being connected (90, 91-96) to one of the input ports (57) of the further add multiplexer (55) of the other add-drop module
the method comprising:
- reconfiguring one or more multiplexers (20, 30, 50, 55) and/or demultiplexers (10, 35, 40, 60) of the system to route network traffic designated to be dropped via a designated add-drop module (AD1-AD3) which is connected to a particular degree (D1-D3) to flow via:
i) another degree, and then
ii) the add-drop module connected to the other degree, and then
iii) the interconnections (80, 90) between the add-drop modules,
to the designated add-drop module.

8. A transitory or non-transitory computer-readable medium (300) comprising a computer program, the computer program comprising instructions (310) for causing a processor system to perform the method according to claim 7.

9. A method (200) of establishing a multi-degree colorless directionless reconfigurable optical add drop multiplexer system, the method comprising:
- providing (210) a plurality of degrees (D1-D3), each of the degrees having:
a demultiplexer (10) having an input port (12) for a wavelength multiplexed input signal and a plurality of output ports (14) for demultiplexing the wavelength multiplexed input signal into a plurality of demultiplexed output signals, and
a multiplexer (20) having an output port (24) for a wavelength multiplexed output signal and a plurality of input ports (22) for multiplexing a plurality of input signals into the wavelength multiplexed output signal;
- providing (220) a plurality of add-drop modules (AD1-AD3) each comprising an add sub-module (A1-A3) and a drop sub-module (DR1-DR3),
each drop sub-module (DR1-DR3) comprising a drop demultiplexer (40) having a plurality of drop ports (42) and a drop multiplexer (30) having a plurality of input ports (32) for multiplexing a plurality of input signals into an output signal provided to the drop demultiplexer,
each add sub-module (A1-A3) comprising an add multiplexer (50) having a plurality of add ports (52) and an add demultiplexer (60) having a plurality of output ports (62) for demultiplexing an output signal of the add multiplexer to the plurality of output ports;
**characterized by**:
- selectively connecting (250) each of the degrees (D1-D3) to a respective one of the add-drop modules (AD1-AD3);
- further providing (230), in each drop sub-module (DR1-DR3), a further drop demultiplexer (35) having a plurality of output ports (37) for demultiplexing an input signal (75) from a respective connected degree (D1-D3) into a plurality of output signals, wherein one of the output ports (37) of the further drop demultiplexer (35) is connected to one of the input ports (32) of the drop multiplexer (30);
- further providing (240), in each add sub-module (A1-A3), a further add multiplexer (55) having a plurality of input ports (57) for multiplexing a plurality of input signals into an output signal (77) to a respective connected degree (D1-D3), wherein one of the input ports (57) of the further add multiplexer (55) is connected to one of the output ports (62) of the add demultiplexer (60); and
- interconnecting (260) each of the add-drop modules (AD1-AD3) to each of the other add-drop modules by:
connecting one of the output ports (37) of the further drop demultiplexer (35) of a respective add-drop module to one of the input ports (32) of the drop multiplexer (30) of the other add-drop module, and
connecting one of the output ports (62) of the add demultiplexer (60) of the respective add-drop module to one of the input ports (57) of the further add multiplexer (55) of the other add-drop module.

10. The method according to claim 9, further comprising interconnecting each of the degrees (D1-D3) to each of the other degrees to form a full mesh of interconnections, wherein an output port of the demultiplexer of the respective degree is connected to an input port of the multiplexer of each of the other degrees.
